# EUROPÄISCHE PATENTSCHRIFT

(11) **EP 3 600 849 B1**
(45) Veröffentlichungstag und Bekanntmachung des Hinweises auf die Patenterteilung: **16.06.2021**
(21) Anmeldenummer: 17713632.2
(22) Anmeldetag: 24.03.2017
(51) Int. Cl.: B29C 65/08, B29C 65/78, B29C 65/00, B60R 19/48, G01D 11/30, B29C 65/06, B29L 31/34, B29L 31/30

(54) **ANBAUTEIL ZUM VERBINDEN MIT EINEM BAUTEIL**
ADD-ON PART FOR CONNECTING TO A COMPONENT
ÉLÉMENT DE MONTAGE À RELIER À UNE PIÈCE

(43) Veröffentlichungstag der Anmeldung: 05.02.2020
(73) Patentinhaber: Telsonic Holding AG, 9552 Bronschhofen (CH)
(72) Erfinder: REGENBERG, Claus, 90513 Zirndorf (DE)
(74) Vertreter: Hepp Wenger Ryffel AG
(86) Internationale Anmeldenummer: PCT/EP2017/057081
(87) Internationale Veröffentlichungsnummer: WO 2018/171896

(56) Entgegenhaltungen:
- DE-A1-102014 226 955

## Beschreibung

Die vorliegende Erfindung betrifft ein Anbauteil zum Verbinden mit einem Bauteil, ein Verfahren zum Verbinden eines solchen Anbauteils mit einem Bauteil und ein Verbundteil, welches ein solches Anbauteil und ein Bauteil enthält. Bei dem Bauteil kann es sich etwa um ein Aussen- oder Innenverkleidungsteil eines Kraftfahrzeugs handeln, beispielsweise einen Stossfänger, eine Seitenverkleidung, einen Spoiler oder einen Schweller. Das Anbauteil kann ein Befestigungsmittel zum Befestigen eines Funktionsteils sein, beispielsweise eines Abstandssensors.

Im Automobilbereich werden sehr häufig Anbauteile an Bauteilen montiert. Beispielweise werden Befestigungsmittel an Stossfängern montiert, wobei die Befestigungsmittel dann ihrerseits einen oder mehrere Abstandssensoren halten. Solche Abstandssensoren können Teil eines PDC-Systems ("Park Distance Control") oder einer PLA-Systems ("Parklenkassistent") sein. Seit einiger Zeit werden derartige Anbauteile erfolgreich mittels torsionalen Ultraschallschweissens mit dem Bauteil verbunden.

Die EP 2 246 178 A1 offenbart beispielsweise ein Anbauteil mit zumindest einer für eine Verschweissung mit einem Bauteil vorgesehenen Schweissstelle, wobei die Verschweissung mit dem torsionalen Ultraschallschweissverfahren erfolgt, bei welchem eine Sonotrode zur Übertragung der den Schweissvorgang erzeugenden Schwingungen auf die Schweissstelle aufgesetzt wird, wodurch die Trennebene zwischen Anbauteil und Bauteil schmilzt und das Anbauteil mit dem Bauteil verschweisst wird. Die Schweissstelle auf dem Anbauteil ist schwingungstechnisch von der restlichen Fläche des Anbauteils entkoppelt. Dies hat zur Folge, dass die von der Sonotrode eingebrachte Energie weitestgehend auf die Schweissstelle übertragen wird und nicht in der restliche Fläche des Anbauteils freigesetzt wird.

Aus der WO 2010/100225 A1 ist ein Ultraschallschweissverfahren zur Befestigung eines Bauteils an einem Funktionsteil bekannt, wobei das Bauteil in einem Halter befestigt wird und der Halter mit dem Funktionsteil verbunden wird. Damit die Halter nicht speziell für das Funktionsteil, an dem sie befestigt werden sollen, ausgebildet sein müssen und keine grossflächigen Klebe- oder Schweissflächen am Halter erforderlich sind, wird als Verfahren das torsionale Ultraschallschweissverfahren verwendet, mit einer Torsionssonotrode zur Übertragung der den Schweissvorgang erzeugenden Schwingungen auf den zu verschweissenden Halter, wobei der Halter mit ersten Kopplungselementen zur Ankopplung der Schwingungen der Torsionssonotrode an den Halter und mit zweiten Kopplungselementen zur Ankopplung der von der Torsionssonotrode induzierten Schwingungen im ersten Kopplungselement an das Funktionsteil versehen wird und dadurch beim Schweissvorgang die Schwingungen der Torsionssonotrode auf die Kopplungselemente und über die Kopplungselemente auf das Funktionsteil übertragen werden und so den Halter mit dem Funktionsteil verschweissen.

In der DE 10 2014 226 955 A1 ist ein Anbauteil zur Verbindung mit einem Bauteil offenbart, wobei das Anbauteil einen mit dem Bauteil mittels eines torsionalen Ultraschallschweissverfahrens zu verschweissenden Schweissabschnitt aufweist, wobei der Schweissabschnitt eine Aufsetzfläche zum Kontakt mit einer Torsionssonotrode sowie eine gegenüberliegende Schweissfläche zur Verbindung mit dem Bauteil aufweist, und wobei der Schweissabschnitt zumindest abschnittsweise von einer äusseren Schwingungsentkopplungszone umgeben ist. Der Schweissabschnitt ist ringförmig ausgebildet und zumindest abschnittsweise durch eine ringförmige innere Schwingungsentkopplungszone begrenzt. Ein solches Anbauteil kann sicher und zuverlässig mit einem Bauteil verschweisst werden. Die Herstellung der Schweissverbindung gelingt dabei unter Verwendung einer verminderten Ultraschallleistung. Eine gegenüberliegende Sichtfläche eines Bauteils wird durch die Herstellung der Ultraschallschweissverbindung nicht beeinflusst. Das ist vorteilhafterweise auch dann der Fall, wenn die gegenüberliegende Sichtfläche bereits mit einer Lackschicht versehen ist.

Aufgrund der sich immer weiter entwickelnden Formenvielfalt im Automobilbereich ist der Raumbereich, in dem das Anbauteil, ein allfälliges daran zu befestigendes Funktionsteil und die zum Schweissen erforderliche Torsionssonotrode positioniert werden können, in vielen Fällen sehr eingeschränkt. Dies liegt beispielsweise an vorgegebenen Krümmungen und Kanten der Bauteile, beispielsweise der Stossfänger, im Bereich der Stelle, an der das Anbauteil befestigt werden soll. Weiterhin sind viele bekannte Anbauteile vergleichsweise gross und aufgrund des höheren Materialbedarfs auch vergleichsweise schwer. Zudem sind viele bekannte Anbauteile vergleichsweise steif, wodurch die Gefahr von Abzeichnungen durch Verspannungen am Bauteil besteht. Beispielsweise können solche Abzeichnungen an der Sichtseite eines Stossfängers auftreten. Diese meist lackierten Oberflächen sind besonders kritisch, wenn sie im direkten Sichtbereich liegen, was zur Einteilung in "Class-A-Oberflächen" und "Class-B-Oberflächen" führt.

Es ist daher eine Aufgabe der vorliegenden Erfindung, die Nachteile des Standes zu überwinden und insbesondere ein Anbauteil zum Verbinden mit einem Bauteil und ein Verfahren zum Verbinden eines Anbauteils mit einem Bauteil bereitzustellen, die das vorteilhafte torsionale Ultraschweissen auch für solche Bauteile zugänglich machen, die nur einen eingeschränkten Raumbereich erlauben, in dem das Anbauteil und ein allfälliges daran zu befestigendes Funktionsteile positioniert und die zum Schweissen erforderliche Torsionssonotrode eingeführt werden können. Vorteilhafterweise sollte das Anbauteil möglichst klein, leicht und wenig steif sein, um Abzeichnungen am Bauteil zu verhindern.

In einem ersten Aspekt der Erfindung wird diese Aufgabe gelöst durch ein Anbauteil zum Verbinden mit einem Bauteil. Das Anbauteil weist eine Anbauteillängsachse und einen mit dem Bauteil mittels torsionalen Ultraschallschweissens zu verschweissenden Schweissabschnitt auf. Der Schweissabschnitt weist eine Aufsetzfläche zum Kontakt mit einer Torsionssonotrode sowie eine Schweissfläche zum Verbinden mit dem Bauteil auf. Der Schweissabschnitt ist zumindest abschnittsweise durch eine innere Schwingungsentkopplungszone begrenzt.

Erfindungsgemäss verläuft die innere Schwingungsentkopplungszone zumindest abschnittsweise geneigt oder parallel zur Anbauteillängsachse. Im Sinne der vorliegenden Erfindung verläuft die innere Schwingungsentkopplungszone geneigt zur Anbauteillängsachse, wenn der zwischen ihr und der Anbauteillängsachse gebildete Winkel grösser als 0°, aber kleiner als 90° ist. Dies steht im Gegensatz zu inneren Schwingungsentkopplungszonen, die innerhalb einer senkrecht zur Anbauteillängsachse angeordneten Ebene verlaufen, so wie es beispielsweise in der oben genannten DE 10 2014 226 955 A1 offenbart ist.

Die Neigung oder Parallelität zur Anbauteillängsachse hat den Vorteil, dass bei vorgegebenem Innendurchmesser der inneren Schwingungsentkopplungszone ein kleinerer Aussendurchmesser der inneren Schwingungsentkopplungszone erreicht werden kann. Somit können auch ein kleinerer Schweissabschnitt und eine kleinere Gesamtdimension des Anbauteils senkrecht zur Anbauteillängsachse ermöglicht werden. Ein kleinerer Schweissabschnitt hat wiederum den positiven Effekt, dass eine kleinere Torsionssonotrode gewählt werden kann, die leichter in dem vom Bauteil zugelassenen Raumbereich positioniert werden kann.

Umgekehrt hat die Neigung oder Parallelität zur Anbauteillängsachse bei vorgegebenem Aussendurchmesser der inneren Schwingungsentkopplungszone den Vorteil, dass der Innendurchmesser der inneren Schwingungsentkopplungszone grösser gewählt werden kann, wodurch grössere Funktionsteile, wie beispielsweise grössere Abstandssensoren, aufgenommen werden können.

Bevorzugt ist die innere Schwingungsentkopplungszone im Wesentlichen konusmantelförmig ausgebildet. Dies ermöglicht eine einfache Herstellung des Anbauteils, beispielsweise wenn es aus Kunststoff besteht und durch ein Spritzgussverfahren hergestellt wird.

Die innere Schwingungsentkopplungszone verläuft bevorzugt unter einem Winkel zur Anbauteillängsachse, der im Bereich von 3° bis 35° liegt. Je kleiner dieser Winkel ist, desto grösser ist die Platzersparnis senkrecht zur Anbauteillängsachse. Durch einen Winkel von mindestens 3° kann aber die Herstellung einiger Ausführungsformen des Anbauteils erleichtert werden; beispielsweise kann ein solcher Winkel bei der Herstellung in einem Spritzgussverfahren für eine vorteilhafte Entformungsschräge sorgen.

Nach einer vorteilhaften Ausgestaltung umgibt die innere Schwingungsentkopplungszone zumindest abschnittsweise einen inneren Anbauteilabschnitt. Vorzugsweise ist der innere Anbauteilabschnitt vollständig durch eine ununterbrochen umlaufende innere Schwingungsentkopplungszone hinsichtlich der Schwingungsübertragung weitgehend entkoppelt. Infolgedessen wird eine in den Schweissabschnitt eingeleitete Ultraschallenergie zu einem grossen Teil auf die Schweissfläche übertragen. Damit gelingt bei vermindertem Energieaufwand sicher und zuverlässig die Herstellung einer Schweissverbindung.

Der innere Anbauteilabschnitt kann einen konzentrisch zur inneren Schwingungsentkopplungszone angeordneten Durchbruch aufweisen. Der Durchbruch kann insbesondere kreisförmig ausgestaltet sein. Durch das Vorsehen eines zentralen Durchbruchs im Anbauteil kann Gewicht eingespart werden.

Nach einer weiteren Ausgestaltung weist der innere Anbauteilabschnitt mehrere bezüglich des Durchbruchs konzentrisch angeordnete Befestigungsabschnitte zum Befestigen eines korrespondierend zu den Befestigungsabschnitten ausgebildeten Funktionsteils auf. Bei dem Funktionsteil kann es sich beispielsweise um einen Abstandssensor eines Kraftfahrzeugs handeln. Die Befestigungsabschnitte können sich im Wesentlichen parallel zur Anbauteillängsachse erstreckende Halte- und Rastzungen umfassen.

Vorteilhafterweise ist der Schweissabschnitt zumindest abschnittsweise von einer äusseren Schwingungsentkopplungszone umgeben. Hierdurch kann die Einleitung von Schwingungen in einen nachfolgend beschriebenen äusseren Anbauteilabschnitt reduziert werden.

Nach einer weiteren vorteilhaften Ausgestaltung erstreckt sich radial ausserhalb von der äusseren Schwingungsentkopplungszone zumindest abschnittsweise ein äusserer Anbauteilabschnitt. Der äussere Anbauteilabschnitt muss bezüglich der Anbauteillängsachse nicht rotationssymmetrisch sein. In einigen Ausführungsformen ist die äussere Schwingungsentkopplungszone vom äusseren Anbauteilabschnitt umgeben. Der äussere Anbauteilabschnitt kann rotationssymmetrisch bezüglich der Anbauteillängsachse ausgebildet sein oder - je nach Geometrie des Bauteils, mit dem das Anbauteil verbunden werden soll - eine andere Geometrie aufweisen.

Nach einer weiteren, besonders vorteilhaften Ausgestaltung der Erfindung ist die innere Schwingungsentkopplungszone und/oder die äussere Schwingungsentkopplungszone durch eine Vielzahl von Entkopplungsöffnungen und/oder durch eine oder mehrere Materialausdünnungen gebildet. Die Entkopplungsöffnungen können beispielsweise rund, trapezförmig, oval oder schlitzförmig ausgebildet sein. Die Ausgestaltung der zweiten Durchbrüche hängt von der Steifigkeit des zur Herstellung des Anbauteils verwendeten Materials sowie dessen Dicke ab.

Nach einer weiteren vorteilhaften Ausgestaltung ist die Schweissfläche durch zumindest eine sich vom Schweissabschnitt erstreckende Rippe gebildet. Die Rippe erstreckt sich zweckmässigerweise konzentrisch zur Anbauteillängsachse. Sie kann umlaufend ausgebildet sein. Die Rippe kann auch aus mehreren umlaufend angeordneten Rippenabschnitten gebildet sein. Zweckmässigerweise ist die Rippe im Querschnitt konisch verjüngt ausgebildet und weist eine Anlagefläche zum Anlegen an das Bauteil auf. Infolgedessen ist eine Kontaktfläche zwischen der Rippe und dem Bauteil beim Beginn des torsionalen Ultraschallschweissens zunächst geringer, so dass anfänglich eine hohe Ultraschallenergie sowie ein hoher Druck auf die Kontaktfläche wirken. Das erleichtert und beschleunigt den Schweissvorgang.

Nach einer weiteren vorteilhaften Ausgestaltung bilden der Schweissabschnitt und der äussere Anbauteilabschnitt eine gemeinsame Platte. Der äussere Anbauteilabschnitt ist insbesondere so ausgestaltet, dass er im Befestigungszustand an einer Fläche, insbesondere einer Innenfläche, des Bauteils anliegt. Der äussere Anbauteilabschnitt kann insbesondere zur Herstellung einer Verklebung mit dem Bauteil verwendet werden. Eine solche Verklebung kann beispielsweise im Reparaturfall erforderlich sein.

Das Anbauteil besteht bevorzugt aus einem Kunststoff. Dies ermöglicht eine stabile Anbindung an das Bauteil durch torsionales Ultraschallschweissen, insbesondere wenn das Bauteil ebenfalls aus Kunststoff besteht. Das Anbauteil kann beispielsweise durch ein Spritzgussverfahren hergestellt werden.

Das Anbauteil kann in Richtung der Anbauteillängsachse eine Höhe haben, die mindestens 10 mm, bevorzugt mindestens 20 mm, besonders bevorzugt mindestens 40 mm beträgt. Senkrecht zur Anbauteillängsachse kann es eine Ausdehnung haben, die mindestens 15 mm beträgt. Der Schweissabschnitt kann eine Dicke im Bereich von 0,8 mm bis 3,0 mm, vorzugsweise im Bereich von 1,0 mm bis 1,6 mm aufweisen.

Ein weiterer Aspekt der Erfindung betrifft Verfahren zum Verbinden eines erfindungsgemässen Anbauteils mit einem Bauteil mit den folgenden Schritten:
a) Inkontaktbringen der Schweissfläche des Anbauteils mit einem Schweissbereich des Bauteils,
b) Ausüben einer Kraft mittels einer Torsionssonotrode auf die Aufsetzfläche, so dass die Schweissfläche gegen den Schweissbereich gedrückt wird und
c) Einleiten einer torsionalen Ultraschallschwingung mittels der Torsionssonotrode in den Schweissabschnitt, so dass die Schweissfläche mit dem Schweissbereich verschweisst wird.

Erfindungsgemäss wird das torsionale Ultraschallschweissverfahren also zur Herstellung einer Verbindung eines Anbauteils mit einem Bauteil verwendet, wobei das Anbauteil einen Schweissabschnitt aufweist und zumindest abschnittsweise durch eine innere Schwingungsentkopplungszone begrenzt ist, wobei die innere Schwingungsentkopplungszone zumindest abschnittsweise geneigt oder parallel zur Anbauteillängsachse verläuft. Hierdurch ergeben sich die oben bereits erläuterten Vorteile. Insbesondere können Bauteile verwendet werden, die nur einen eingeschränkten Raumbereich erlauben, in dem das Anbauteil, ein allfälliges daran zu befestigendes Funktionsteil und die zum Schweissen erforderliche Torsionssonotrode positioniert werden können.

Sofern das Bauteil dies zulässt, kann es in einigen Situationen vorteilhaft sein, wenn zumindest ein Teil des Bauteils vor Schritt b) durch Einwirkung der Torsionssonotrode derart deformiert wird, dass die Torsionssonotrode in Kontakt mit der Aufsetzfläche bringbar ist. Vor und/oder während und/oder nach Schritt c) kann die Deformation zumindest teilweise wieder rückgängig gemacht werden. Durch eine derartige temporäre Deformation sind noch weitere Bauteile dem erfindungsgemässen Verfahren zugänglich.

Die Torsionssonotrode kann eine Sonotrodenlängsachse aufweisen, welche mit der Torsionsachse der von ihr vollzogenen Torsionsschwingungen übereinstimmt. Sie kann eine Arbeitsfläche aufweisen, welche in den Schritten b) und c) auf die Aufsetzfläche des Anbauteils gedrückt wird. Die Arbeitsfläche kann ringförmig ausgebildet sein. Sie kann senkrecht zur Sonotrodenlängsachse verlaufen oder eine andere bezüglich der Sonotrodenlängsachse zylindersymmetrische, dreidimensionale Form aufweisen.

Die Torsionssonotrode kann ferner einen Hohlraum zur zumindest teilweisen Aufnahme des Anbauteils während Schritt c) aufweisen. Um die Positionierung der Torsionssonotrode weiter zu erleichtern oder überhaupt erst zu ermöglichen, kann der Hohlraum umfangsseitig von einer Wand begrenzt sein, deren Aussenseite sich in Richtung der Sonotrodenlängsachse und von der Arbeitsfläche weg zumindest abschnittsweise aufweitet. Es muss dann nur der Abschnitt der Wand, der zwischen der Aufweitung und der Arbeitsfläche und damit der Aufsetzfläche angeordnet ist, in einen möglicherweise durch die Geometrie des Bauteils beengten Raumbereich eingeführt werden.

Um einen durch die Geometrie des Bauteils beengten Raumbereich zugänglich zu machen, kann es ebenso vorteilhaft sein, wenn die Sonotrodenlängsachse vor Schritt c) zumindest zeitweise unter einem Winkel zur Anbauteillängsachse angeordnet ist. Dieser Winkel ist bevorzugt kleiner als 20°.

Ein weiterer Aspekt der Erfindung ist ein Verbundteil, welches ein erfindungsgemässes Anbauteil und ein Bauteil enthält, wobei die Schweissfläche des Anbauteils mit einem Schweissbereich des Bauteils verschweisst ist. Das Verbundteil kann beispielsweise mit dem erfindungsgemässen Verfahren hergestellt sein.

Sowohl im erfindungsgemässen Verfahren als auch im erfindungsgemässen Verbundteil kann das Bauteil ein Aussen- oder Innenverkleidungsteil eines Kraftfahrzeugs sein, beispielsweise ein Stossfänger, eine Seitenverkleidung, ein Spoiler oder ein Schweller. Das Anbauteil kann ein Befestigungsmittel zum Befestigen eines Funktionsteils, beispielsweise eines Abstandssensors, sein.

Nachfolgend wird die Erfindung von Ausführungsbeispielen und Zeichnungen näher erläutert. Dabei zeigen
- Figur 1:: eine perspektivische Ansicht eines erfindungsgemässen Anbauteils;
- Figur 2:: eine Seitenansicht des Anbauteils;
- Figur 3:: eine Draufsicht des Anbauteils;
- Figur 4:: eine Untersicht des Anbauteils;
- Figur 5:: ein erfindungsgemässes Verfahren zum Verbinden des Anbauteils mit einem Stossfänger zu einem ersten Zeitpunkt;
- Figur 6:: das erfindungsgemässe Verfahren zu einem späteren zweiten Zeitpunkt.

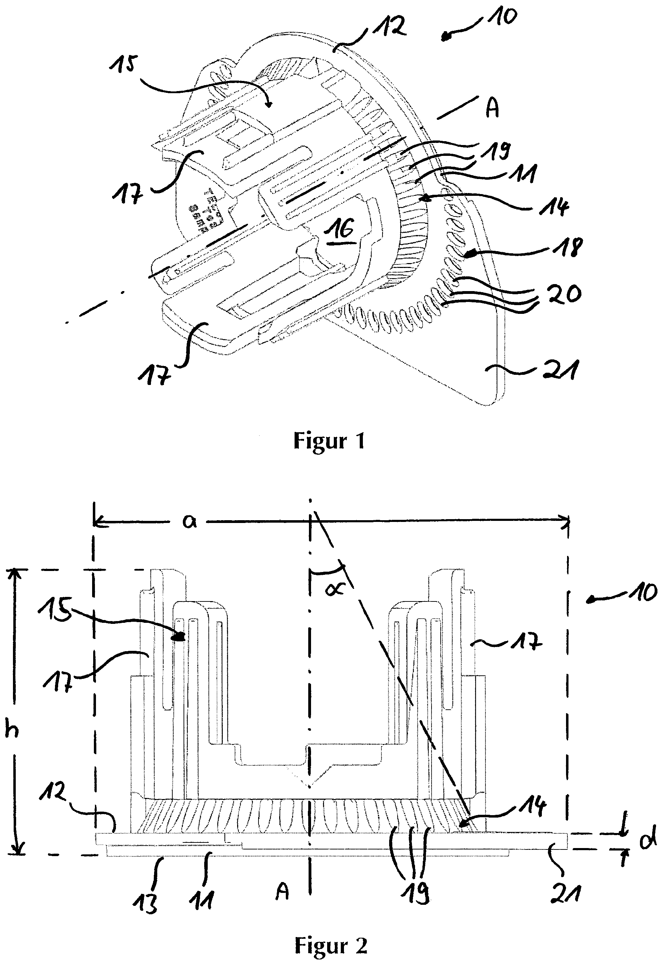

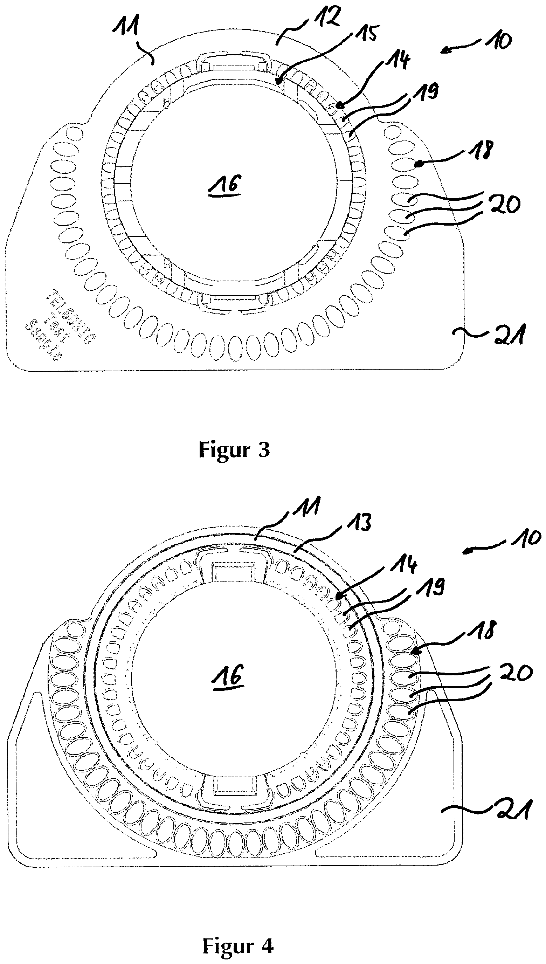

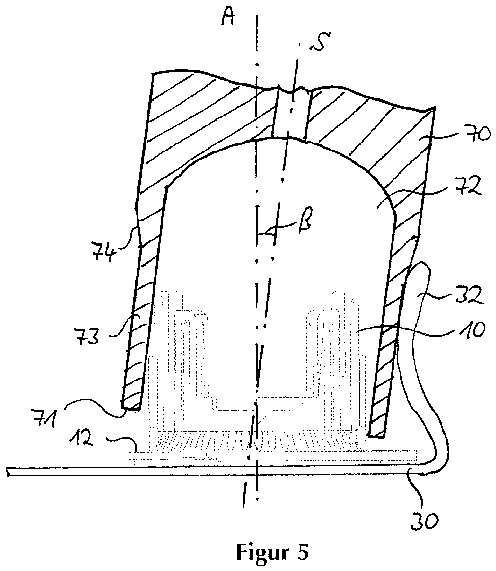

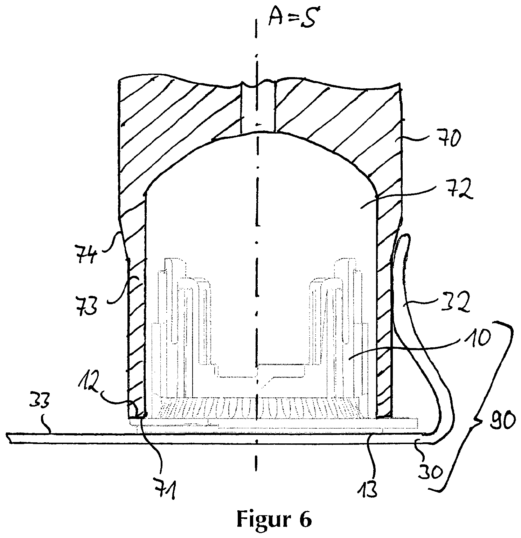

Das in den Figuren 1 bis 4 dargestellte Anbauteil 10, welches beispielsweise aus einem Kunststoff bestehen und durch ein Spritzgussverfahren hergestellt sein kann, enthält einen Schweissabschnitt 11 zum Kontakt mit einer Torsionssonotrode 70 (siehe dazu Figuren 5 und 6). Der Schweissabschnitt 11 ist senkrecht zu einer Anbauteillängsachse A ausgerichtet und weist eine im Wesentlichen ringförmig ausgebildete Aufsetzfläche 12 zum Kontakt mit der Torsionssonotrode 70 auf. Gegenüberliegend der Aufsetzfläche 12 befindet sich eine Schweissfläche 13 zur Verbindung mit einem Bauteil 30 (siehe dazu auch Figuren 5 und 6). Die Schweissfläche 13 ist durch eine sich vom Schweissabschnitt 11 erstreckende Rippe 13 gebildet.

Der Schweissabschnitt 11 ist nach innen von einer inneren Schwingungsentkopplungszone 14 begrenzt und nach aussen abschnittsweise von einer äusseren Schwingungsentkopplungszone 18 umgeben, der wiederum abschnittsweise von einem äusseren Anbauteilabschnitt 21 umgeben ist. Der Schweissabschnitt 11 und der äussere Anbauteilabschnitt 21 bilden eine insbesondere ebene gemeinsame ebene Platte. Die innere Schwingungsentkopplungszone 14 verläuft geneigt zur Anbauteillängsachse A. Genauer ist sie im Wesentlichen konusmantelförmig ausgebildet und verläuft unter einem Winkel α zur Anbauteillängsachse A, der im Bereich von 3° bis 35° liegen kann. Diese Neigung hat den Vorteil, dass bei vorgegebenem Innendurchmesser der inneren Schwingungsentkopplungszone 14 ein kleinerer Aussendurchmesser der inneren Schwingungsentkopplungszone 14 erreicht werden kann. Umgekehrt kann bei vorgegebenem Aussendurchmesser der inneren Schwingungsentkopplungszone 14 der Innendurchmesser der inneren Schwingungsentkopplungszone 14 grösser gewählt werden.

Die innere Schwingungsentkopplungszone 14 umgibt einen inneren Anbauteilabschnitt 15, der einen konzentrisch zur Anbauteillängsachse A angeordneten Durchbruch 16 aufweist. Der innere Anbauteilabschnitt 15 weist mehrere bezüglich der Anbauteillängsachse A konzentrisch angeordnete Befestigungsabschnitte in Form von Halte- und Rastzungen 17 zum Befestigen eines korrespondierend zu den Halte- und Rastzungen 17 ausgebildeten Funktionsteils auf, beispielsweise eines Abstandssensors.

Die innere Schwingungsentkopplungszone 14 und die äussere Schwingungsentkopplungszone 18 sind durch eine Vielzahl von benachbart angeordneten, ovalen Schwingungsentkopplungszone 19 bzw. 20 gebildet. Die Durchbrüche 20 bilden jeweils konzentrisch bezüglich der Anbauteillängsachse A ringabschnittsförmige Zonen.

Das Anbauteil 10 hat in Richtung der Anbauteillängsachse A eine Höhe h = 25 mm und senkrecht zur Anbauteillängsachse A eine Ausdehnung a = 35 mm. Der Schweissabschnitt 11 hat eine Dicke d = 1,0 mm. Das Anbauteil 10 ist vergleichsweise klein, leicht und wenig steif, wodurch störende Abzeichnungen an einem Stossfänger 30 verhindert werden können.

Figur 5 zeigt einen Ausschnitt eines erfindungsgemässen Verfahrens zur Herstellung einer Ultraschallschweissverbindung des Anbauteils 10 gemäss Figuren 1 bis 4 mit einem Stossfänger 30 zu einem ersten Zeitpunkt.

Eine zum Schweissen verwendete Torsionssonotrode 70 enthält eine Sonotrodenlängsachse S, welche mit der Torsionsachse der von ihr vollzogenen Torsionsschwingungen übereinstimmt. Sie enthält ferner eine Arbeitsfläche 71, welche eben und ringförmig ausgebildet ist und senkrecht zur Sonotrodenlängsachse S verläuft. Weiterhin enthält sie einen Hohlraum 72. Der Hohlraum 72 ist umfangsseitig von einer Wand 73 begrenzt, deren Aussenseite 74 sich in Richtung der Sonotrodenlängsachse S und von der Arbeitsfläche 71 weg abschnittsweise aufweitet.

Zur Herstellung der Ultraschallschweissverbindung wird in einem Schritt a) das Anbauteil 10 derart auf den Stossfänger 30 gelegt, dass die Schweissfläche 13 des Anbauteils 10 mit einem Schweissbereich 31 des Stossfängers 30 in Kontakt ist.

Anschliessend wird in einem Schritt b) durch Einwirkung der Torsionssonotrode 70 ein Teil des Stossfängers 30 derart deformiert, dass die Torsionssonotrode 70 in Kontakt mit der Aufsetzfläche 12 bringbar ist (siehe Figur 5). Dabei ist die Sonotrodenlängsachse S unter einem Winkel β zur Anbauteillängsachse A angeordnet, der bevorzugt kleiner als 20° ist. Mittels der Torsionssonotrode 70 wird dann eine Kraft auf die Aufsetzfläche 12 ausgeübt, so dass die Schweissfläche 13 vollständig gegen den Schweissbereich 31 gedrückt wird.

Nachfolgend wird in einem in Figur 6 dargestellten Schritt c) mittels der Torsionssonotrode 70 eine torsionale Ultraschallschwingung in den Schweissabschnitt 11 eingeleitet, wodurch die Schweissfläche 13 mit dem Schweissbereich 31 verschweisst wird. Dabei stimmen die Anbauteillängsachse A und die Sonotrodenlängsachse S überein, das Anbauteil 10 ist teilweise im Hohlraum 72 aufgenommen, und der äussere Anbauteilabschnitt 21 liegt an einer Innenfläche 33 des Stossfängers 30 an.

Durch dieses Verfahren wird ein erfindungsgemässes Verbundteil 90 erhalten, welches aus dem Stossfänger 30 und dem damit verbundenen Anbauteil 10 besteht. Mittels der Halte- und Rastzungen 17 kann ein Abstandssensor am Anbauteil 10 und damit indirekt am Stossfänger 30 befestigt werden.

## Patentansprüche

1. Anbauteil (10) zum Verbinden mit einem Bauteil (30), wobei
- das Anbauteil (10) eine Anbauteillängsachse (A) und einen mit dem Bauteil (30) mittels torsionalen Ultraschallschweissens zu verschweissenden Schweissabschnitt (11) aufweist,
- der Schweissabschnitt (11) eine Aufsetzfläche (12) zum Kontakt mit einer Torsionssonotrode (70) sowie eine Schweissfläche (13) zum Verbinden mit dem Bauteil (30) aufweist und
- der Schweissabschnitt (11) zumindest abschnittsweise durch eine innere Schwingungsentkopplungszone (14) begrenzt ist,
**dadurch gekennzeichnet, dass**
die innere Schwingungsentkopplungszone (14) zumindest abschnittsweise geneigt oder parallel zur Anbauteillängsachse (A) verläuft.

2. Anbauteil (10) gemäss Anspruch 1,
wobei die innere Schwingungsentkopplungszone (14) im Wesentlichen konusmantelförmig ausgebildet ist.

3. Anbauteil (10) gemäss einem der vorangehenden Ansprüche,
wobei die innere Schwingungsentkopplungszone (14) unter einem Winkel (α) zur Anbauteillängsachse (A) verläuft, der im Bereich von 3° bis 35° liegt.

4. Anbauteil (10) gemäss einem der vorangehenden Ansprüche,
wobei die innere Schwingungsentkopplungszone (14) zumindest abschnittsweise einen inneren Anbauteilabschnitt (15) umgibt, der insbesondere einen konzentrisch zur Anbauteillängsachse (A) angeordneten Durchbruch (16) aufweist.

5. Anbauteil (10) gemäss einem der vorangehenden Ansprüche,
wobei der innere Anbauteilabschnitt (15) mehrere bezüglich der Anbauteillängsachse (A) konzentrisch angeordnete Befestigungsabschnitte (17) zum Befestigen eines korrespondierend zu den Befestigungsabschnitten (17) ausgebildeten Funktionsteils aufweist.

6. Anbauteil (10) gemäss einem der vorangehenden Ansprüche,
wobei der Schweissabschnitt (11) zumindest abschnittsweise von einer äusseren Schwingungsentkopplungszone (18) umgeben ist.

7. Anbauteil (10) gemäss einem der vorangehenden Ansprüche,
wobei die innere Schwingungsentkopplungszone (14) und/oder die äussere Schwingungsentkopplungszone (18) durch eine Vielzahl von Entkopplungsöffnungen (19, 20) oder durch eine oder mehrere Materialausdünnungen gebildet ist.

8. Anbauteil (10) gemäss einem der vorangehenden Ansprüche,
wobei die Schweissfläche (13) durch zumindest eine sich vom Schweissabschnitt (11) erstreckende Rippe (13) gebildet ist.

9. Anbauteil (10) gemäss einem der vorangehenden Ansprüche,
wobei das Anbauteil (10) aus einem Kunststoff besteht.

10. Verfahren zum Verbinden eines Anbauteils (10) gemäss einem der vorangehenden Ansprüche mit einem Bauteil (30) mit folgenden Schritten:
a) Inkontaktbringen der Schweissfläche (13) des Anbauteils (10) mit einem Schweissbereich (31) des Bauteils (30),
b) Ausüben einer Kraft mittels einer Torsionssonotrode (70) auf die Aufsetzfläche (12), so dass die Schweissfläche (13) gegen den Schweissbereich (31) gedrückt wird und
c) Einleiten einer torsionalen Ultraschallschwingung mittels der Torsionssonotrode (70) in den Schweissabschnitt (11), so dass die Schweissfläche (13) mit dem Schweissbereich (31) verschweisst wird.

11. Verfahren gemäss Anspruch 10,
wobei zumindest ein Teil (32) des Bauteils (30) vor Schritt b) durch Einwirkung der Torsionssonotrode (70) derart deformiert wird, dass die Torsionssonotrode (70) in Kontakt mit der Aufsetzfläche (12) bringbar ist.

12. Verfahren gemäss einem der Ansprüche 10 und 11,
wobei
- die Torsionssonotrode (70) einen Hohlraum (72) zur zumindest teilweisen Aufnahme des Anbauteils (10) während Schritt c) aufweist und
- der Hohlraum (72) umfangsseitig von einer Wand (73) begrenzt ist, deren Aussenseite (74) sich in Richtung einer Sonotrodenlängsachse (S) und von einer Arbeitsfläche (71) der Sonotrode (70) weg zumindest abschnittsweise aufweitet.

13. Verfahren gemäss einem der Ansprüche 10 bis 12,
wobei die Torsionssonotrode (70) eine Sonotrodenlängsachse (S) aufweist und die Sonotrodenlängsachse (S) vor Schritt c) zumindest zeitweise unter einem Winkel (β) zur Anbauteillängsachse (A) angeordnet ist, der bevorzugt kleiner als 20° ist.

14. Verfahren gemäss einem der Ansprüche 10 bis 13,
wobei das Bauteil (30) ein Aussen- oder Innenverkleidungsteil eines Kraftfahrzeugs ist, beispielsweise ein Stossfänger (30), eine Seitenverkleidung, ein Spoiler oder ein Schweller, und das Anbauteil (10) ein Befestigungsmittel (10) zum Befestigen eines Funktionsteils, beispielsweise eines Abstandssensors, ist.

15. Verbundteil (90), enthaltend ein Anbauteil (10) gemäss einem der Ansprüche 1 bis 9 und ein Bauteil (30), wobei die Schweissfläche (13) mit einem Schweissbereich (31) des Bauteils (30) verschweisst ist, insbesondere in einem Verfahren gemäss einem der Ansprüche 10 bis 14, wobei insbesondere das Bauteil (30) ein Aussen- oder Innenverkleidungsteil eines Kraftfahrzeugs ist, beispielsweise ein Stossfänger, eine Seitenverkleidung, ein Spoiler oder ein Schweller, und das Anbauteil (10) ein Befestigungsmittel (10) zum Befestigen eines Funktionsteils, beispielsweise eines Abstandssensors, ist.

## Claims

1. An attachment part (10) for connecting to a structural part (30), wherein
- the attachment part (10) has an attachment part longitudinal axis (A), and a weld portion (11) to be welded to the structural part (30) by means of torsional ultrasonic welding,
- the weld portion (11) has a contact surface (12) for contact with a torsion sonotrode (70), and a weld surface (13) for connecting to the structural part (30), and
- the weld portion (11) is delimited, at least portionally, by an inner vibration decoupling zone (14),
**characterized in that**
the inner vibration decoupling zone (14), at least portionally, is inclined in relation to the attachment part longitudinal axis (A) or is parallel thereto

2. The attachment part (10) as claimed in claim 1,
wherein the inner vibration decoupling zone (14) is realized substantially in the form of a conical surface.

3. The attachment part (10) as claimed in either one of the preceding claims,
wherein the inner vibration decoupling zone (14) extends at an angle (α), in relation to the attachment part longitudinal axis (A), which angle is in the range of from 3° to 35°.

4. The attachment part (10) as claimed in any one of the preceding claims,
wherein the inner vibration decoupling zone (14), at least portionally, surrounds an inner attachment part portion (15), which in particular has a through-hole (16) arranged concentrically in relation to the attachment part longitudinal axis (A).

5. The attachment part (10) as claimed in any one of the preceding claims,
wherein the inner attachment part portion (15) has a plurality of fastening portions (17), arranged concentrically with respect to the attachment part longitudinal axis (A), for fastening a functional part realized to correspond to the fastening portions (17).

6. The attachment part (10) as claimed in any one of the preceding claims,
wherein the weld portion (11) is surrounded, at least portionally, by an outer vibration decoupling zone (18) .

7. The attachment part (10) as claimed in any one of the preceding claims,
wherein the inner vibration decoupling zone (14) and/or the outer vibration decoupling zone (18) are/is formed by a multiplicity of decoupling openings (19, 20) and/or by one or more thinned regions of material.

8. The attachment part (10) as claimed in any one of the preceding claims,
wherein the weld surface (13) is formed by at least one rib (13) extending from the weld portion (11).

9. The attachment part (10) as claimed in any one of the preceding claims,
wherein the attachment part (10) is composed of a plastic.

10. A method for connecting an attachment part (10), as claimed in any one of the preceding claims, to a structural part (30), having the following steps:
a) bringing the weld surface (13) of the attachment part (10) into contact with a weld region (31) of the structural part (30),
b) exerting a force upon the contact surface (12) by means of a torsion sonotrode (70), such that the weld surface (13) is pressed against the weld region (31), and
c) introducing a torsional ultrasonic vibration into the weld portion (11) by means of the torsion sonotrode (70), such that the weld surface (13) becomes welded to the weld region (31).

11. The method as claimed in claim 10,
wherein, before step b), at least a part (32) of the structural part (30) is deformed, by action of the torsion sonotrode (70), in such a manner that the torsion sonotrode (70) can be brought into contact with the contact surface (12).

12. The method as claimed in either one of claims 10 and 11,
wherein
- the torsion sonotrode (70) has a cavity (72) for at least partially receiving the attachment part (10) during step c), and
- the cavity (72) is circumferentially delimited by a wall (73), the outer side (74) of which widens, at least portionally, in the direction of a sonotrode longitudinal axis (S) and away from a work surface (71) of the sonotrode (70).

13. The method as claimed in any one of claims 10 to 12,
wherein the torsion sonotrode (70) has a sonotrode longitudinal axis (S) and, before step c), the sonotrode longitudinal axis (S) is arranged, at least temporarily, at an angle (β) in relation to the attachment part longitudinal axis (A), which angle is preferably less than 20°.

14. The method as claimed in any one of claims 10 to 13,
wherein the structural part (30) is an external or internal facing part of a motor vehicle, for example a bumper (30), side panel, spoiler or sill, and the attachment part (10) is a fastening means (10) for fastening a functional part, for example a distance sensor.

15. A composite part (90), including an attachment part (10) as claimed in any one of claims 1 to 9 and a structural part (30), wherein the weld surface (13) is welded to a weld region (31) of the structural part (30), in particular in a method as claimed in any one of claims 10 to 14, wherein in particular the structural part (30) is an external or internal facing part of a motor vehicle, for example a bumper, side panel, spoiler or sill, and the attachment part is a fastening means (10) for fastening a functional part, for example a distance sensor.

## Revendications

1. Pièce de fixation (10) pour la connexion à un composant (30), dans laquelle
- la pièce de fixation (10) présente un axe longitudinal (A) de la pièce de fixation et une section de soudage (11) à souder sur le composant (30) au moyen d'une sonotrode ultrasonique en torsion,
- la section de soudage (11) présente une surface de contact (12) pour le contact avec une sonotrode de torsion (70) et une surface de soudage (13) pour la connexion au composant (30) et
- la section de soudage (11) est délimitée, au moins par sections, par une zone intérieure de découplage des vibrations (14),
**caractérisé en ce que**
la zone intérieure de découplage des vibrations (14) s'étend, au moins par sections, dans une manière inclinée ou parallèle à l'axe longitudinal (A) de la pièce de fixation.

2. Pièce de fixation (10) selon la revendication 1,
dans laquelle la zone intérieure de découplage des vibrations (14) est sensiblement conique.

3. Pièce de fixation (10) selon l'une des revendications précédentes,
dans laquelle la zone intérieure de découplage des vibrations (14) fait un angle (α) par rapport à l'axe longitudinal (A) de la pièce de fixation, dans lequel l'angle (α) est situé dans la plage de 3° à 35°.

4. Pièce de fixation (10) selon l'une des revendications précédentes,
dans laquelle la zone intérieure de découplage des vibrations (14) entoure, au moins par sections, une section intérieure (15) de la pièce de fixation qui présente, en particulier, une ouverture (16) disposée concentriquement par rapport à l'axe longitudinal (A) de la pièce de fixation.

5. Pièce de fixation (10) selon l'une des revendications précédentes,
dans laquelle la section intérieure (15) de la pièce de fixation présente plusieurs sections de fixation (17) disposées concentriquement par rapport à l'axe longitudinal (A) de la pièce de fixation pour la fixation d'une pièce fonctionnelle formée d'une manière correspondant aux sections de fixation (17).

6. Pièce de fixation (10) selon l'une des revendications précédentes,
dans laquelle la section de soudage (11) est entourée, au moins par sections, par une zone extérieure de découplage des vibrations (18).

7. Pièce de fixation (10) selon l'une des revendications précédentes,
dans laquelle la zone intérieure de découplage des vibrations (14) et/ou la zone extérieure de découplage des vibrations (18) est formée par une pluralité d'ouvertures de découplage (19, 20) ou par un ou plusieurs amincissements de matériau.

8. Pièce de fixation (10) selon l'une des revendications précédentes,
dans laquelle la surface de soudage (13) est formée par au moins une nervure (13) s'étendant à partir de la section de soudage (11).

9. Pièce de fixation (10) selon l'une des revendications précédentes,
où la pièce de fixation (10) est constituée d'un plastique.

10. Méthode de raccordement d'une pièce de fixation (10) selon l'une des revendications précédentes à un composant (30), comprenant les étapes suivantes :
a) mettre la surface de soudage (13) de la pièce de fixation (10) en contact avec une zone de soudage (31) du composant (30),
b) exercer une force au moyen d'une sonotrode de torsion (70) sur la surface de contact (12) de sorte que la surface de soudage (13) soit pressée contre la zone de soudage (31), et
c) introduire une vibration ultrasonique de torsion au moyen de la sonotrode de torsion (70) dans la section de soudage (11) de sorte que la surface de soudage (13) soit soudée à la zone de soudage (31).

11. Méthode selon la revendication 10,
dans laquelle au moins une partie (32) du composant (30) est déformée avant l'étape b) par l'action de la sonotrode de torsion (70) de sorte que la sonotrode de torsion (70) peut être mise en contact avec la surface de contact (12).

12. Méthode selon l'une des revendications 10 et 11,
où
- la sonotrode de torsion (70) présente une cavité (72) pour recevoir au moins partiellement la pièce de fixation (10) pendant l'étape c), et
- la cavité (72) est délimitée circonférentiellement par une paroi (73) dont la face extérieure (74) s'élargit, au moins par sections, dans la direction d'un axe longitudinal (S) de la sonotrode et en s'éloignant d'une surface de travail (71) de la sonotrode (70).

13. Méthode selon l'une des revendications 10 à 12,
dans laquelle la sonotrode de torsion (70) présente un axe longitudinal de sonotrode (S) et l'axe longitudinal de sonotrode (S) est disposé avant l'étape c) au moins temporairement sous un angle (β) par rapport à l'axe longitudinal (A) de la pièce de fixation, dans lequel l'angle (β) est de préférence inférieur à 20°.

14. Méthode selon l'une des revendications 10 à 13,
dans laquelle le composant (30) est une pièce de garniture extérieure ou intérieure d'un véhicule automobile, par exemple un pare-chocs (30), une garniture latérale, un becquet ou un seuil, et la pièce de fixation (10) est un moyen de fixation (10) pour fixer une pièce fonctionnelle, par exemple un capteur de distance.

15. Pièce composite (90), comprenant une pièce de fixation (10) selon l'une des revendications 1 à 9 et un composant (30), dans laquelle la surface de soudage (13) est soudée à une zone de soudage (31) du composant (30), en particulier dans un procédé selon l'une des revendications 10 à 14, dans laquelle, en particulier, le composant (30) est une pièce de garniture extérieure ou intérieure d'un véhicule automobile, par exemple un pare-chocs, une garniture latérale, un becquet ou un seuil, et la pièce de fixation (10) est un moyen de fixation (10) pour fixer une pièce fonctionnelle, par exemple un capteur de distance.
